# EUROPEAN PATENT SPECIFICATION

(11) **EP 4 466 839 B1**
(45) Date of publication and mention of the grant of the patent: **03.06.2026**
(21) Application number: 23743582.1
(22) Date of filing: 19.01.2023
(51) Int. Cl.: H04L 47/24, H04B 7/02, H04L 67/61

(54) **METHODS FOR HANDLING OF REQUESTED INFORMATION**
VERFAHREN ZUR HANDHABUNG VON ANGEFORDERTEN INFORMATIONEN
PROCÉDÉS DE TRAITEMENT D'INFORMATIONS DEMANDÉES

(30) Priority: 21.01.2022 GR 20220100053
(43) Date of publication of application: 27.11.2024
(73) Proprietor: Telefonaktiebolaget LM Ericsson (publ), 164 83 Stockholm (SE)
(72) Inventor: LUNARDI, Luca, 16121 Genova (IT); CENTONZA, Angelo, 18008 Granada (ES); SOLDATI, Pablo, 170 73 Solna (SE); SALTSIDIS, Panagiotis, 118 28 Stockholm (SE); PAPPA, Ioanna, 118 28 Stockholm (SE); RYDÉN, Henrik, 117 27 Stockholm (SE); BASSI, Germán, 120 60 Årsta (SE); BRUHN, Philipp, 52064 Aachen (DE)
(74) Representative: Ericsson
(86) International application number: PCT/SE2023/050047
(87) International publication number: WO 2023/140773

(56) References cited:
- WO-A1-2013/123971
- CN-A- 104 519 582
- JP-A- 2017 139 684
- US-A1- 2021 328 934
- US-B2- 11 026 074
- ORANGE ET AL: "SBA message priority specification based on a custom HTTP header and stream priority", vol. CT WG4, no. KunMing, P.R. China; 20180416 - 20180420, 20 April 2018 (2018-04-20), XP051434365, Retrieved from the Internet <URL:http://www.3gpp.org/ftp/tsg%5Fct/WG4%5Fprotocollars%5Fex%2DCN4/TSGCT4%5F84%5FKunMing/Docs/> [retrieved on 20180420]

## Description

### TECHNICAL FIELD

This disclosure relates to handling of requested information in communications networks. Aspects of the disclosure relate to artificial intelligence/machine learning, subscription information, and radio networks.

### BACKGROUND

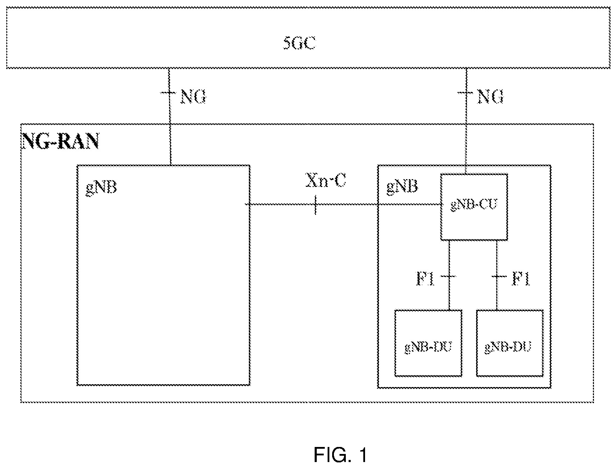

FIG. 1 is an architecture diagram of a Next Generation (NG) Radio Access Network (RAN). The NG-RAN consists of a set of gNBs connected to the 5GC through the NG interface. (Note: As specified in 3GPP Technical Specification 38.300, v16.8.0, NG-RAN could also consist of a set of ng-eNBs, an ng-eNB may consist of an ng-eNB-CU and one or more ng-eNB-DU(s). An ng-eNB-CU and an ng-eNB-DU is connected via W1 interface. The general principle described in this section also applies to ng-eNB and W1 interface, if not explicitly specified otherwise.) A gNB can support FDD mode, TDD mode or dual mode operation. Additionally, gNBs can be interconnected through the Xn interface.

A gNB may consist of a gNB-CU and one or more gNB-DU(s). A gNB-CU and a gNB-DU is connected via F1 interface. One gNB-DU is connected to only one gNB-CU. (NOTE: In case of network sharing with multiple cell ID broadcast, each Cell Identity associated with a subset of PLMNs corresponds to a gNB-DU and the gNB-CU it is connected to, i.e. the corresponding gNB-DUs share the same physical layer cell resources. For resiliency, a gNB-DU may be connected to multiple gNB-CUs by appropriate implementation.)

NG, Xn and F1 are logical interfaces. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The node hosting user plane part of NR PDCP (e.g. gNB-CU, gNB-CU-UP, and for EN-DC, MeNB or SgNB depending on the bearer split) shall perform user inactivity monitoring and further inform its inactivity or (re)activation to the node having C-plane connection towards the core network (e.g. over E1, X2). The node hosting NR RLC (e.g. gNB-DU) may perform user inactivity monitoring and further inform its inactivity or (re)activation to the node hosting control plane, e.g. gNB-CU or gNB-CU-CP.

UL PDCP configuration (i.e. how the UE uses the UL at the assisting node) is indicated via X2-C (for EN-DC), Xn-C (for NG-RAN) and F1-C. Radio Link Outage/Resume for DL and/or UL is indicated via X2-U (for EN-DC), Xn-U (for NG-RAN) and F1-U.

The NG-RAN is layered into a Radio Network Layer (RNL) and a Transport Network Layer (TNL).

The NG-RAN architecture, i.e. the NG-RAN logical nodes and interfaces between them, is defined as part of the RNL.

For each NG-RAN interface (NG, Xn, F1) the related TNL protocol and the functionality are specified. The TNL provides services for user plane transport, signalling transport.

In NG-Flex configuration, each NG-RAN node is connected to all AMFs of AMF Sets within an AMF Region supporting at least one slice also supported by the NG-RAN node. The AMF Set and the AMF Region are defined in 3GPP TS 23.501, v17.3.0.

If security protection for control plane and user plane data on TNL of NG-RAN interfaces has to be supported, NDS/IP 3GPP TS 33.501, v17.4.0, shall be applied.

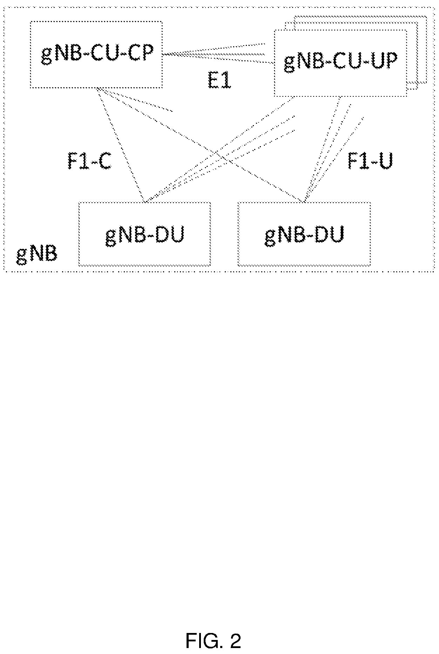

FIG. 2 is an architecture diagram of separation of gNB-CU-CP and gNB-CU-UP. The overall architecture for separation of gNB-CU-CP and gNB-CU-UP is depicted in FIG. 2. A gNB may consist of a gNB-CU-CP, multiple gNB-CU-UPs and multiple gNB-DUs. The gNB-CU-CP is connected to the gNB-DU through the F1-C interface. The gNB-CU-UP is connected to the gNB-DU through the F1-U interface. The gNB-CU-UP is connected to the gNB-CU-CP through the E1 interface. One gNB-DU is connected to only one gNB-CU-CP. One gNB-CU-UP is connected to only one gNB-CU-CP.

NOTE 1: For resiliency, a gNB-DU and/or a gNB-CU-UP may be connected to multiple gNB-CU-CPs by appropriate implementation.

One gNB-DU can be connected to multiple gNB-CU-UPs under the control of the same gNB-CU-CP. One gNB-CU-UP can be connected to multiple DUs under the control of the same gNB-CU-CP.

NOTE 2: The connectivity between a gNB-CU-UP and a gNB-DU is established by the gNB-CU-CP using Bearer Context Management functions.

NOTE 3: The gNB-CU-CP selects the appropriate gNB-CU-UP(s) for the requested services for the UE. In case of multiple CU-UPs they belong to same security domain as defined in TS 33.210, v17.0.0.

NOTE 4: Data forwarding between gNB-CU-UPs during intra-gNB-CU-CP handover within a gNB may be supported by Xn-U.

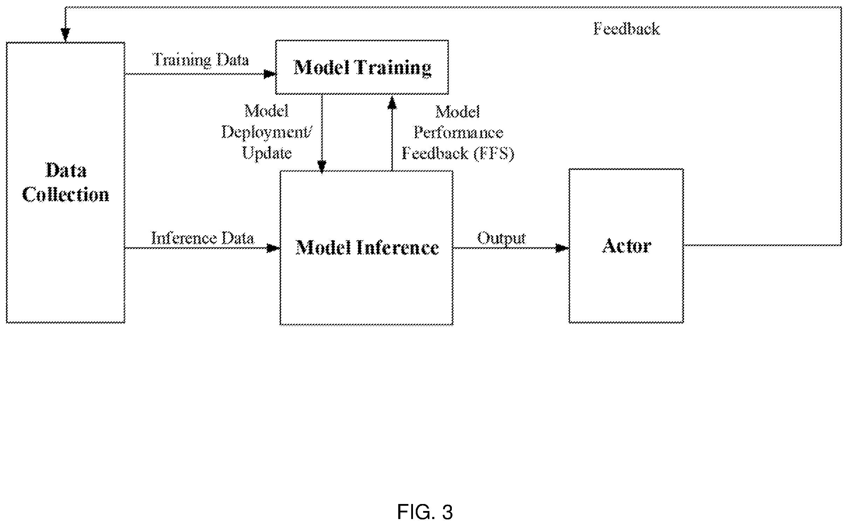

FIG. 3 is a functional framework for RAN intelligence. FIG. 3 is the Functional Framework for RAN Intelligence, as captured in 3GPP document R3-221014.

The Data Collection functional block is a function that provides input data to Model training and Model inference functions. Al/ML algorithm specific data preparation (e.g., data pre-processing and cleaning, formatting, and transformation) is not carried out in the Data Collection function. Examples of input data may include measurements from UEs or different network entities, feedback from Actor, output from an Al/ML model. Training Data: Data needed as input for the AI/ML Model Training function. Inference Data: Data needed as input for the Al/ML Model Inference function.

The Model Training functional block is a function that performs the ML model training, validation, and testing which may generate model performance metrics as part of the model testing procedure. The Model Training function is also responsible for data preparation (e.g. data pre-processing and cleaning, formatting, and transformation) based on Training Data delivered by a Data Collection function, if required. Model Deployment/Update: Used to initially deploy a trained, validated, and tested Al/ML model to the Model Inference function or to deliver an updated model to the Model Inference function. (Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study.)

The Model Inference functional block is a function that provides Al/ML model inference output (e.g. predictions or decisions). It is FFS whether it provides model performance feedback to Model Training function. The Model inference function is also responsible for data preparation (e.g. data pre-processing and cleaning, formatting, and transformation) based on Inference Data delivered by a Data Collection function, if required. Output: The inference output of the Al/ML model produced by a Model Inference function. (Note: Details of inference output are use case specific.) (FFS) Model Performance Feedback: Applied if certain information derived from Model Inference function is suitable for improvement of the AI/ML model trained in Model Training function. Feedback from Actor or other network entities (via Data Collection function) may be needed at Model Inference function to create Model Performance Feedback. (Note: Details of the Model Performance Feedback process are out of RAN3 Rel-17 study scope.)

The Actor functional block is a function that receives the output from the Model inference function and triggers or performs corresponding actions. The Actor may trigger actions directed to other entities or to itself. Feedback: Information that may be needed to derive training or inference data or performance feedback.

The Model Training and Model Inference functions should be able to request, if needed, specific information to be used to train or execute the Al/ML algorithm and to avoid reception of unnecessary information. The nature of such information depends on the use case and on the Al/ML algorithm.

The Model Inference function should signal the outputs of the model only to nodes that have explicitly requested them (e.g. via subscription), or nodes that are subject to actions based on the output from Model Inference.

One of the main principles of the currently discussed Functional Framework for RAN Intelligence is the use of a subscription paradigm, so that information is transferred from a second functional block (e.g. Model Training or Model Inference) to a first functional block once a subscription request from the first functional block has been accepted by the second functional block.

CN 1045195828 discloses method and device for realizing cooperative transmission. Document ORANGE ET AL: "SBA message priority specification based on a custom HTTP header and stream priority",3GPP DRAFT; C4-183511-WAS-3473-WAS-3298-WAS-3250_SBA MESSAGE PRIORITY SPECIFICATION BASED ON A CUSTOM HTTP HEADER AND STREAM PRIORITY, 3RD GENERATION PARTNERSHIP PROJECT (3GPP), MOBILE COMPETENCE CENT,vol. CT WG4, no. KunMing, P.R. China; 20180416 - 20180420 20 April 2018 discloses message prioritisation.

### SUMMARY

In a non-published internal reference, methods are described wherein a first network node sends a subscription request to obtain from a second network node historical data associated to an Al/ML model or algorithm. Some indications that the first network node can indicate to the second network node have been identified. In particular:
(a) Indication(s) of the time or period of the collection of data, such as data collected for a certain time prior to the present time;
(b) An indication of the type of data requested, which may include: Historical data associated to the Al/ML model, such as measurements or estimate of the network state and/or user state that were used for inference of the AIML model or algorithm. Inference data associated to the Al/ML model or algorithm, such as a set of input data used by the model inference function executing the AI/ML model or algorithm. In one example, the first network node could subscribe to historical inference data. In another example, the first network node may subscribe to recent or live inference data associated to at least one Al/ML model or algorithm. Feedback received from a third network node (inference function);
(c) Timing related indications, indicating e.g. a validity time associated to the subscription;
(d) One or more filtering criteria concerning types, scopes, granularity or aggregation levels of requested historical data. Non-limiting examples can be: one or more period of collection, data selected in a random fashion, data associated with one or more radio network procedure (e.g. mobility), data related to one or more user equipment or type of user equipment, data pertaining to performance indicators, to UE or network configuration data, data collected for one or more area of interests (e.g. one or more coverage area, one or more cell, one or more carrier frequency, one or more TAs, one or more TAls, one or more PLMN, one or more RAT), data collected for one or more S-NSSAI, or one or more 5QI, or one or more service, data collected for MDT, data collected for QoE, radio measurements, load metrics, data related to energy savings (e.g. an energy score), data collected at TTI levels, per milliseconds, per second, per day, per reporting period. Filtering criteria can be combined. For example, the request of historical data can indicate that data of interest is a load metric for a list of cells, or an energy score and corresponding UE configuration data;
(e) One or more conditions pertaining to the sending of historical data, such as: (i) a periodic sending with a reporting periodicity, (ii) a sending based on event (e.g. upon availability of the data), (iii) timing indications such as a start time for initiating the sending, an end time to stop the sending, a duration during which the sending can happen, a duration of pause, a time to resume, (iv) indications of a size of historical data required, such as the number of data samples per batch of historical data to be provided to the first network node, a minimum, a maximum amount of historical data (overall and/or per attempt of sending), (v) indications to pause or resume sending of historical data.

The tasks of collecting, processing, storing, and transmitting data/information used by different network nodes may consume a considerable amount of resources in the nodes themselves. Existing solutions do not allow the nodes to know if certain data is more important/relevant than other, and thus prioritize them in case the available resources are limited.

Accordingly, embodiments disclosed herein enable a first network node to send a subscription request - sent from the first network node to a second network node - wherein weights and/or priorities are included. The weights (and/or priorities) can be used by the second network node to determine whether and which information is more relevant for the first network node. The weight(s) may take effect always or upon conditions that the first network node can signal to the second network node.

The first network node can indicate, as part of a subscription request, weight factor(s) and/or priority(ies) associated to the requested data. In case the requested data is provided by the second network node, the second network node can use the received weights and/or priorities.

The requested data received at the first network node can pertain to the second network node or to a third network node (in which case it is sent to the first network node via the second network node).

According to one aspect, a method performed by a first network node for handling requested information with, i.e. in collaboration with, a second network node is provided. The method includes obtaining a weight indication of one or more weight(s) of requested information and/or a priority indication of one or more priority(ies) of requested information. The method also includes generating a first request message, the first request message comprising the weight indication and/or the priority indication. The method also includes transmitting the first request message towards the second network node.

According to another aspect, there is provided a method performed by a second network node for handling requested information in collaboration with a first network node. The method includes receiving a first request message transmitted by the first network node, the first request message comprising a first weight indication of one or more weight(s) of requested information and/or a first priority indication of priority(ies) of requested information. The method also includes generating a second message comprising a response to the first request message based on the first weight and/or first priority indication. The method also includes transmitting the second message towards the first network node.

In another aspect there is provided a computer program comprising instructions which when executed by processing circuitry of an apparatus causes the apparatus to perform any of the methods disclosed herein. In one embodiment, there is provided a carrier containing the computer program wherein the carrier is one of an electronic signal, an optical signal, a radio signal, and a computer readable storage medium. In another aspect there is provided an apparatus that is configured to perform the methods disclosed herein. The apparatus may include memory and processing circuitry coupled to the memory.

An advantage of the embodiments disclosed herein is that they enable a function/node part of an Al/ML Functional Framework to indicate preferences (expressed as weights and/or priorities) related to receiving data from another function/node of the AI/ML Functional Framework (a second network node or a third network node, via the second network node).

### BRIEF DESCRIPTION OF THE DRAWINGS

The accompanying drawings, which are incorporated herein and form part of the specification, illustrate various embodiments.
FIG. 1 is an architecture diagram of a Next Generation (NG) Radio Access Network (RAN).
FIG. 2 is an architecture diagram of separation of gNB-CU-CP and gNB-CU-UP.
FIG. 3 illustrates a functional framework for RAN intelligence. FIG. 4 illustrates a flow chart according to an embodiment.
FIG. 4 is a signaling diagram, according to some embodiments.
FIG. 5 is a signaling diagram, according to some embodiments.
FIG. 6 is a signaling diagram, according to some embodiments.
FIG. 7 illustrates a method, according to some embodiments.
FIG. 8 illustrates a method, according to some embodiments
FIG. 9 is a block diagram of an apparatus, according to some embodiments.

### DETAILED DESCRIPTION

According to some embodiments, the subscription mechanism is extended such that a first network node can subscribe to receive data/information from a second network node (and/or a third network node) and include in the subscription request one or more weights and/or priorities to be used by the second network node (and/or the third network node) in determining which data is more relevant for the first network node. In one embodiment, the first network node and the second network node (or a third network node) are part of an Al/ML functional framework.

According to some embodiments, a network node as used herein can be a UE, a RAN node, a gNB, an eNB, an en-gNB, a ng-eNB, a gNB-CU, a gNB-CU-CP, a gNB-CU-UP, an eNB-CU, an eNB-CU-CP, an eNB-CU-UP, an IAB-node, an IAB-donor DU, an IAB-donor-CU, an IAB-DU, an IAB-MT, an O-CU, an O-CU-CP, an O-CU-UP, an O-DU, an O-RU, an O-eNB, a CN node, an OAM node, an SMO node, a network node realizing at least in part a Non-Real Time Radio Intelligent Controller (Non-Real Time RIC); a network node realizing at least in part a Near-Real Time RIC; or a Cloud-based centralized training node.

### First Network Node Embodiments

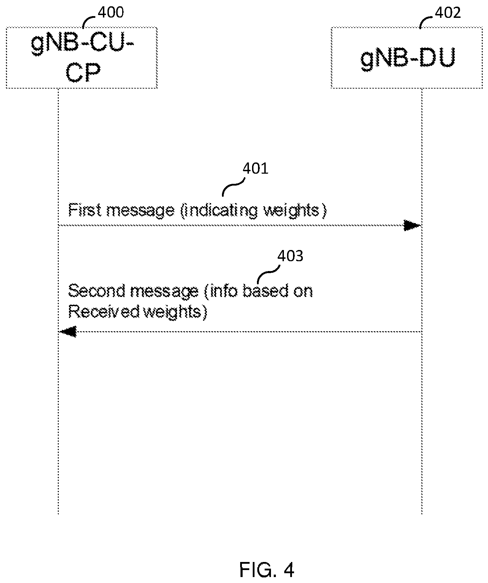

FIG. 4 is a signaling diagram, according to some embodiments. FIG. 4 illustrates a first network node 400 as a gNB-CU-CP and a second network node 402 as a gNB-DU. In one embodiment, a first network node 400 sends towards a second network node 402 a first request message 401 (a.k.a., "first message" 401 for short) to obtain data/information pertaining to a second network node (or to a third network node, and sent to the first network node via the second network node). The second network node 402 sends a second message 403 towards the first network node 400 including information based on the weights/priorities. The first request message 401 includes at least one of the following.

Weight(s). Request 401 may include one or more weight(s) that can be used by the second network node 402 when sending data towards the first network node 400. The weight may be used for different purposes, such as, for example: (a) to penalize the sending of certain data towards the first network node compared to other data (e.g. using a weight value strictly lower than one and strictly higher than zero); (b) to promote the sending of certain data towards the first network node compared to other data (e.g. using a weight value strictly greater than one); (c) to normalize (or continue as is) the sending of certain data towards the first network node (e.g. using a weight value equal to one); (d) to prohibit the sending of certain data towards the first network node (e.g. using a weight value equal to zero); (e) to reduce/accelerate the rate of sending of certain data; and/or (f) to introduce a cap to the sending of certain data. Note that alternative methods to express the logic associated to a weight compared to the provided examples are not precluded, e.g. negative values for a weight can be used to indicate "penalize", and positive values to "promote." The weight may be associated to the traffic at the first network node 400 aggregated at different levels (e.g. node, cell, service type, slice, SSB). The first network node can obtain an indication of a weight at least as follows: as a configuration parameter, as an information received from another network node (e.g. as an Information Element comprised in an inter-node message, such as an NGAP or XnAP message), as a policy, e.g. received from another network node (e.g. an OAM node, an SMO node, a CN node). The first network node can also derive an indication of a weight based on one of the options mentioned above (one or more configuration parameters, one or more received IEs, one or more policies). The first network node can also derive an indication of a weight based on an internal function (e.g. as an output produced by an Al/ML model internal to the node).

Priorities. Request 401 may include one or more priorities that can be used by the second network node 402 when deciding to transfer data/information towards the first network node 400. A possible use of the priority can be that the first network node indicates that sending a first set of data should occur prior to sending further sets of data (second, third, etc). Priorities can be expressed in different ways (such as integer values, bitmaps, enumerated). In some embodiments, priority(ies) and weight(s) can be used as independent indications to control the sending of data from the second network node to the first network node. For example, the same priority can be associated to a plurality of data sets (e.g. based on common aspect between the data sets, such as the use of certain services or Radio Access Technology), and within the plurality of data sets associated to the same priority value, more weights can be used to further distinguish between them. For example, data sets collected by UEs connected to NG-RAN can be associated to a higher priority compared to data sets collected by UEs connected to E-UTRAN. Within UEs connected to NG-RAN, a further distinction can be made by indicating a first weight for data collected by UEs in Carrier Aggregation or in Multi-Connectivity, and a second weight for data collected by UEs in single connectivity. The opposite way of using priorities and weights is not precluded either, meaning that a same weight can be associated to one plurality of data sets, and within the plurality of data sets, a distinction among two or more data sets comprised in the plurality of data sets is made on the basis of different priorities. The first network node can obtain an indication of a priority at least as follows: as a configuration parameter, as an information received from another network node (e.g. as an Information Element comprised in an inter-node message, such as an NGAP or XnAP message), as a policy, e.g. received from another network node (e.g. an OAM node, an SMO node, a CN node). The first network node can also derive an indication of a priority based on one of the options mentioned above (one or more configuration parameters, one or more received IEs, one or more policies). The first network node can also derive an indication of a priority based on an internal function (e.g. as an output produced by an Al/ML model internal to the node).

Suspension. Request 401 may include an indication that sending of data/information towards the first network node is suspended until further notice (such as a resume indication) or temporarily.

Overload. Request 401 may include an indication that an overload situation is ongoing at the first network node or that an overload situation has been resolved at the first network node.

Amount. Request 401 may include an indication of the amount of data/information that the first network node is willing to accept. The amount may be defined for the whole subscription, per unit of time, or per each individual transmission; moreover, the amount may further be defined as a unique value for all data sources, or different amounts for different (groups of) data sources. Non limiting examples can be the total number of transmitted bits or a data budget. The budget relates to a cost assigned to each data type; the cost can be a function of the weights and/or priorities, it can be signaled independently by the first network node, or it can be defined by the second network node. For example, the cost may be associated with computational complexity to produce the data or process it in the nodes, or it may be related to the cost of communication.

Conditions. Request 401 may include conditions associated to the weights and/or priorities, indicating whether and how such weights and/or priorities can be applied. Non limiting examples can be: (a) an indication of a time interval (or a number of reporting periods or a number of sampling periods or equivalent) within which the weights and/or priorities are applicable (or within which should not be applied); (b) an indication that weight(s) or priority(ies) is(are) associated to all data/information; or (c) an indication that weight(s) or priority(ies) is(are) associated only to specific data/information or to specific aggregation level of the data. For example, different weights can be used to indicate that the first network node is more interested to receive data aggregated at cell level rather than at SSB area level. Another example can be that weights indicate that receiving data aggregated at cell level is more important than data at UE level (or vice versa). Non-limiting example of such information can be measurements or prediction(s) of a specific load metric, feedback(s) after mobility, successful handover reports, radio link failure reports, handover failure reports, QoE reports, RVQoE reports, performance of a cells served by the second network node, energy saving information pertaining to the RAN node or to a UE, or a radio configuration selected for a UE. Conditions associated to the weights and/or priorities can be based on the ability of the sender (e.g. the second network node) to transmit one specific data (e.g. a specific Information Element, IE) or the ability of the sender to transmit a plurality of data. On this, for example the first network node subscribes to receive IEs A, B, C, D, E, F, but the second network node can only transmit IEs A, B, C, D, E, because the corresponding limit is exceeded, and IEs D and E are of no use for the first network node without IE F. The first network node can indicate a condition indicating that if it cannot receive IE F, it also doesn't need to receive a specific IE (e.g IE D) or a group of IEs, (e.g. IE D and E). One use case of this would be the following: the first network node may use the information for inference and there are two Al/ML models (a simpler model which requires IE A, B, C as input and a more complex model that requires IE A, B, C, D, E, and F as input). So, if the first network node cannot receive IE F, it has no use for IE D and E because it has to use the simpler model anyway.

Events to be fulfilled. Request 401 may include events to be fulfilled to be used as triggering conditions for applying the weights and/or priorities, such as radio related events associated to mobility, start of handover preparation/execution, start/termination of an energy saving action, activation/deactivation of a service, or change in QoS parameters .

An indication/request instructing the second network node to indicate to the first network node whether and how the weight(s) and/or priorities provided by the first network node will be / is being applied, or whether support for such weights and/or priorities is or is not supported at the second network node. In addition, the second network node may additionally be required to indicated whether information is provided with a different set of weights and/or priorities.

Weights and/or priorities can be expressed as single values, or as an array of values (e.g. as range of discrete values).

In a first example, a weight associated to feedbacks related to mobility and expressed as a unique value applicable to all UEs.

In a second example, a weight associated to feedbacks related to mobility can be expressed as an array of values, where a first value weight_1 is to be applied for feedbacks related to UEs using a first 5QI (or a first combination of QoS parameters), and a second value weight_2 is to be applied for feedback concerning UEs using a second 5QI (or a second combination of QoS parameter).

In another example, a weight associated to feedbacks related to mobility can be expressed as an array of values, where a first value weight_1 is to be applied for feedbacks related to UEs using single connectivity, and a second value weight_2 is to be applied for feedback concerning UEs in multi-connectivity (e.g. NR-DC or EN-DC).

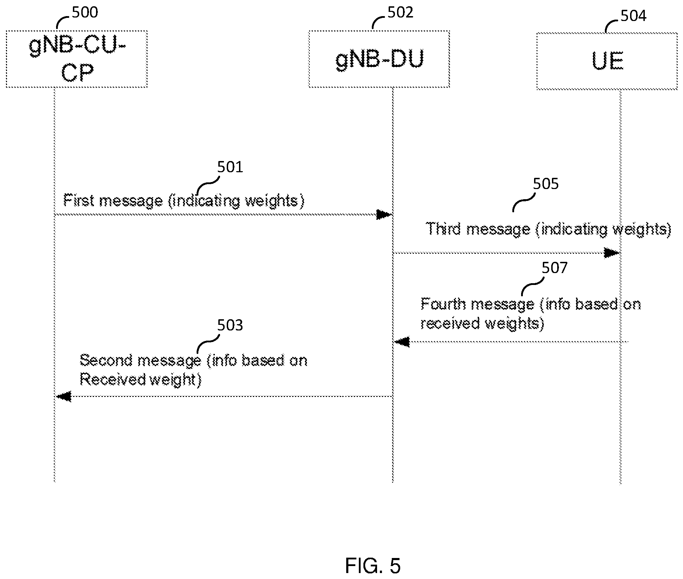

FIG. 5 illustrates a signaling diagram, according to some embodiments. FIG. 5 illustrates a first network node 500 as gNB-CU-CP, a second network node 502 as gNB-DU, and a third network node 504 as a UE. The first network node 500 sends a first request message 501 (a.k.a., "first message" 501 for short) indicating weights/priorities towards the second network node 502. The second network node 502 sends a third message 505 towards the third network node 504 indicating the weights/priorities. The third network node 504 sends a fourth message 507 towards the second network node including information based on the weights/priorities. The second network node 502 sends the second message 503 towards the first network node 500 including information based on the weights/priorities.

In another embodiment, the subscription request can be addressed to a plurality of second network nodes and/or a plurality of third network nodes. For example, a gNB-CU-CP can send a subscription request to a gNB-DU for obtaining data/information from a plurality of UEs. The weight(s) or priority(ies) can then be associated to information that can be obtained from more than one source.

### Second Network Node Embodiments

In one embodiment a second network node receives from a first network node a subscription request (e.g., message 401 or 501) comprising one or more weight(s) and/or one or more priority(ies) as described in the embodiments above for the first network node.

If the subscription indicates that data/information is to be retrieved from a third network node (e.g. from a plurality of third network nodes neighboring the second network node, or from many UEs), the second network node can perform one or more of the following actions.
(1) Forward the subscription request as is, on behalf of the first network node to the third network node (e.g., message 505), hence including the original weights and/or priorities as received from the first network node. With this, the weights and/or priorities can be used by the third network node to determine which data is more relevant for the first network node.
(2) Forward the subscription request, on behalf of the first network node, to the third network node (e.g., message 505), but excluding at least part of the original weights and/or priorities as received from the first network node. With this, the second network node is the entity using at least part of the weights and/or priorities to determine the sending of data (obtained from third network node(s)) towards the first network node.
(3) Prepare and send a new request (e.g., message 505) to one or more third network nodes comprising weights/priorities received from the first network node.
(4) Determine actions/weights/priorities/indications/configurations based at least in part on the weights/priorities received from the first network node and send a request (e.g., message 505) comprising the new weights/priorities/indications to one or more third network nodes. For example, the first network node can indicate a specific weight indicating that (e.g. during a certain time interval), predictions of a first load metric are more important compared to predictions of a second load metric. The second network node can use the weight to send a request for the third network node indicating to stop a (preexisting) reporting on both predicted first load metric and predicted second load metric and start reporting only predicted first load metrics.
(5) Filter data/information received from third network node(s) based on the weights and/or priorities (or other indications) comprised in the subscription request received from the first network node (e.g. discard data, pruning). For example, the first network node can indicate a specific weight value indicating that receiving data collected for NG-RAN should be promoted compared to reception of data collected for E-UTRAN. The second network node can use the weight to filter out UE measurements collected for E-UTRAN and only send to the first network node UE measurements collected for NG-RAN (e.g., in message 403 or 503).

In one embodiment, the second network node determines the sending of data/information to the first network node (e.g., message 403 or 503) based on the weights/priorities received from the first network node.

The second network node may respond to the first network node (e.g., message 403 or 503) indicating that the weight(s) and/or priorities will be / is being applied, or that support for such weights and/or priorities is or is not supported, or the cost associated to a certain information is too high. The second node could for example estimate the cost for each information request and use the weights as additional information on how to tradeoff the weights versus cost of data collection.

In one embodiment, the second network node may respond (e.g., message 403 or 503) with the amount of data/information that it is willing to/can transmit. The amount may be defined for the whole subscription, per unit of time, or per each individual transmission; moreover, the amount may further be defined as a unique value for all data sources, or different amounts for different (groups of) data sources. For example, this limitation may correspond to availability of resources in the second network node and/or in a (plurality of) third network node(s). As described above, non-limiting examples of the amount could be a total number of bits transmitted or a data budget.

In one embodiment, the second network node, together with or as part of the data sent to the first network node (data of the second network node or on behalf of third network node(s), may indicate which weight(s) and/or priority(ies) has(have) been applied.

In a further embodiment, the second network node, may associate its own weights to the reported data. These weights are used to indicate the relative importance of the reported data, and can be based on a number of parameters, which can include, but not limited, to the quality of the associated methods used in retrieving the reported data, the accuracy of the data, etc.

The second network node may also indicate additional information, e.g. reference to techniques applied to satisfy the original request from the first network node.

The embodiments targeting the first network node, second network node and third network node are also applicable to network node(s) deployed in distributed architecture (e.g. an NG-RAN node comprising a gNB-CU-CP controlling one or more gNB-DUs and one or more gNB-CU-UPs) in different variants. Some non-limiting examples: (1) In a gNB, the first network node is a gNB-DU, second network node is the gNB-CU-CP (or vice versa). (2) In a gNB, the first network node is a gNB-CU-CP, second network node is a gNB-CU-UP (or vice versa). (3) In a gNB, the first network node is the gNB-CU-CP, second network nodes are a plurality of gNB-DUs connected to the gNB-CU-CP. (4) In a gNB, the first network node is the gNB-CU-CP, second network node is a gNB-DU, third network node is a UE (or a group of UEs). (5) In a gNB, the first network node is the gNB-CU-CP, second network node is a gNB-CU-UP and third network node is a UE. (6) The first network node is gNB-DU, the second network node is a gNB-DU (note: currently no standard interface is specified between gNB-DUs).

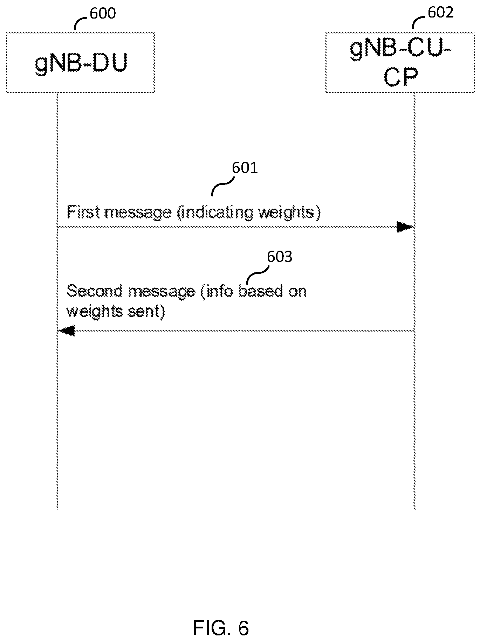

FIG. 6 illustrates a signaling diagram, according to some embodiments. In FIG. 6, the first node 600 is a gNB-DU and the second node 602 is a gNB-CU-CP. The messages 601 and 603 are similar as described above for messages 401/501 and 403/503, respectively. Other combinations of network nodes are also possible, regardless of whether a RAN node is deployed in split architecture of not, e.g.: (1) The first network node is a first RAN node, second node is a second RAN node, third network node is a third RAN node. (2) The first network node is a first RAN node, second node is a first function of a second RAN node (e.g. the gNB-CU-CP), third network node(s) is(are) second function(s) of the second RAN node (e.g. one or more gNB-DUs or one of more gNB-CU-UPs of the second RAN node). (3) The first network node is a first RAN node, second node is a second RAN node, third network node is a UE.

### Machine Learning Embodiments

In one embodiment, the first node is a training node and the second node is a data collection node providing input data used by the model in the first node. In case the first network node hosts a function training an ML-model, it can set the weights according to an expected feature importance value, for example configured using domain expertise, or by the feature importance from models trained in other network nodes for the same radio network operation. This can ensure that the most important features are signaled to the training entity. One example is the mobility prediction use case, where the prediction performance is more dependent on acquiring UE speed information than UE radio measurements. The weights for such speed information can thus be higher than weights for radio quality measurements on reference signals such as CSI-RS.

According to embodiments, an expected importance value for the one or more features corresponds to one or more weights for one or more inputs.

In another embodiment, the first node is a ML model inference node and the second node is a data collection node providing input data used by the model in the first node. In case the first network node hosts a function for performing ML-model inference using the subscribed information from the second node as inputs to the model, it can by using the feature importance set a certain weight for the specific inputs. For low importance features, the inference node can impute missing values, e.g. set the missing value to the mean value of the training data for the specific feature (information not signaled from the second node). The method of how to impute missing values can be included in the model deployment step from training to inference node.

The inferring node can understand using data from the training step which features (information in the second node) that cannot be excluded, e.g. no imputation techniques can reach satisfactory performance. These features can be associated to a high weight and cannot be omitted by the second network node. In case all mandatory features cannot be signaled, the data collection node can skip signaling any of the requested features, to avoid unnecessary overhead. For example, the second network node is configured with an aggregated weight threshold, if the sum of the weights for all its features to be transmitted is below a certain threshold value, said node avoids transmitting such features.

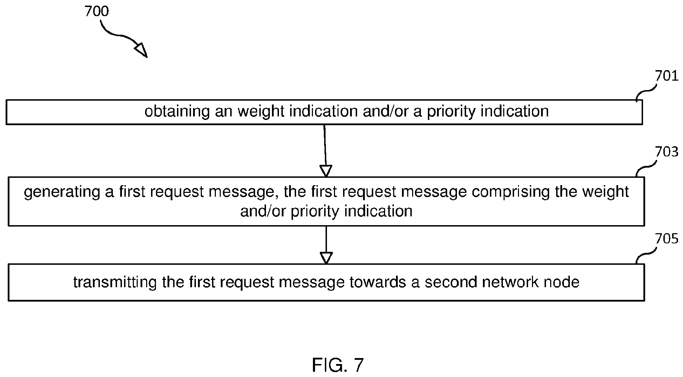

FIG. 7 illustrates a method 700, according to some embodiments. In some embodiments, method 700 is performed by a first network node for handling requested information with, i.e. in collaboration with, a second network node. Step 701 includes the first network node obtaining a weight indication of one or more weight(s) of requested information and/or a priority indication of one or more priority(ies) of requested information. Step 703 includes the first network node generating a first request message (e.g., 401, 501, 601), the first request message comprising the weight indication and/or the priority indication. Step 705 includes the first network node transmitting the first request message towards the second network node.

In some embodiments, the process also includes the first network node receiving a second message (e.g., 403, 503, 603) transmitted by the second network node. The second message comprising one or more of: information selected based on the weight indication and/or the priority indication, an indication of an amount of information that the second node may transmit towards the first network node, an indication that the second network node can or cannot support the indication, an indication of which indication of priority of requested information the second network node will apply, an indication of which indication of weight of requested information the second network node will apply, or a reference to one or more techniques applied in response to the request for information.

In some embodiments, the second message comprises information obtained from a third network node (e.g. node 504).

In some embodiments, the first request message comprises: the weight indication, wherein the weight indication indicates a weight to be used when sending the requested information towards the first network node, and/or the priority indication, wherein the priority indication indicates a priority to be used when determining to transfer the requested information towards the first network node.

In some embodiments, the first request message further comprises a condition relating to the weight indication and/or the priority indication, wherein the condition comprises one or more of: an instruction for applying the weight and/or priority indication to the information, or a triggering condition for applying the weight and/or priority indication to the information.

In some embodiments, the request message comprises the weight indication, and the weight indication: penalizes sending of first information towards the first network node compared to sending second information different than the first information, promotes sending of the first information towards the first network node compared to sending the second information, normalizes or continue sending the first information towards the first network node, prohibits sending the first information towards the first network node, reduces or increases a rate of sending of the first information towards the first network node, and/or introduces a cap to sending of the first information.

In some embodiments, the first network node comprises a function training a machine learning model, the first request message requests training data comprising one or more features, and the weight and/or priority indication comprises an expected importance value for the one or more features.

In some embodiments, the first request message comprise the weight indication, the first network node comprises a function performing machine learning model inference, the first request message requests one or more inputs to the machine learning model, and the weight indication comprises one or more weights for the one or more inputs.

In some embodiments, the first request message further comprises: an indication that transferring the requested information towards the first network node is suspended, an indication relating to an overload condition at the first network node, and/or an indication of an amount of information to transmit towards the first network node.

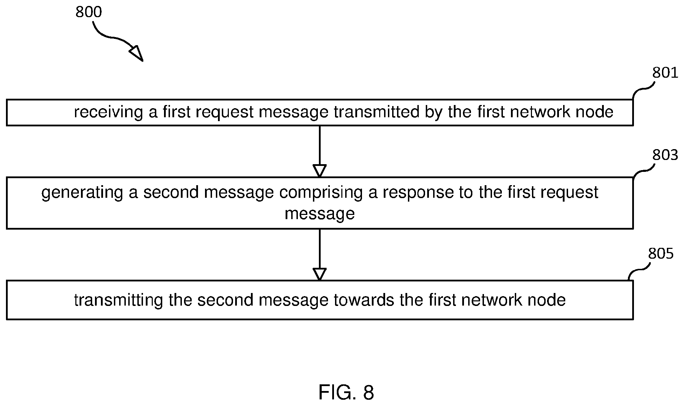

FIG. 8 illustrates a method 800, according to some embodiments. In some embodiments, method 800 is performed by a second network node for handling requested information with, i.e. in collaboration with, a first network node. Step 801 includes the second network node receiving a first request message transmitted by the first network node, the first request message comprising a first weight indication of one or more weight(s) of requested information and/or a first priority indication of priority(ies) of requested information. Step 803 includes the second network node generating a second message comprising a response to the first request message based on the first weight and/or first priority indication. Step 805 includes the second network node transmitting the second message towards the first network node.

In some embodiments, the process also includes the second network node generating a third message (e.g., message 505) based on the first weight and/or first priority indication; and transmitting the third message towards a third network node (e.g., node 504).

In some embodiments, the third message comprises: the first weight and/or first priority indication that was included in the first request message, a second weight indication of one or more weight(s) of requested information, and/or a second priority indication of one or more priority(ies) of requested information.

In some embodiments, the process also includes the second network node receiving a fourth message (e.g., message 507) from the third network node, the fourth message comprising information selected based on a priority or a weight indication included in the third message.

In some embodiments, the second message comprises one or more of: information selected based on the first weight and/or first priority indication, an indication of an amount of information that the second node may transmit towards the first network node, an indication that the second network node can or cannot support the indication, an indication of which indication of priority of requested information the second network node will apply, or a reference to one or more techniques applied in response to the request for information.

In some embodiments, the first request message comprises: the first weight indication, wherein the first weight indication indicates a weight to be used when sending the requested information towards the first network node, and/or the first priority indication, wherein the first priority indication indicates a priority to be used when determining to transfer the requested information towards the first network node.

In some embodiments, first request message further comprises a condition relating to the first weight and/or first priority indication, wherein the condition comprises one or more of: an instruction for applying the first weight and/or first priority indication to the information, or a triggering condition for applying the first weight and/or first priority indication to the information.

In some embodiments, the request message comprises the weight indication, and the weight indication: penalizes sending of first information towards the first network node compared to sending second information different than the first information, promotes sending of the first information towards the first network node compared to sending the second information, normalizes or continue sending the first information towards the first network node, prohibits sending the first information towards the first network node, reduces or increases a rate of sending of the first information towards the first network node, or introduces a cap to sending of the first information.

In some embodiments, the first request message further comprises: an indication that transferring the requested information towards the first network node is suspended, an indication relating to an overload condition at the first network node, or an indication of an amount of information to transmit towards the first network node.

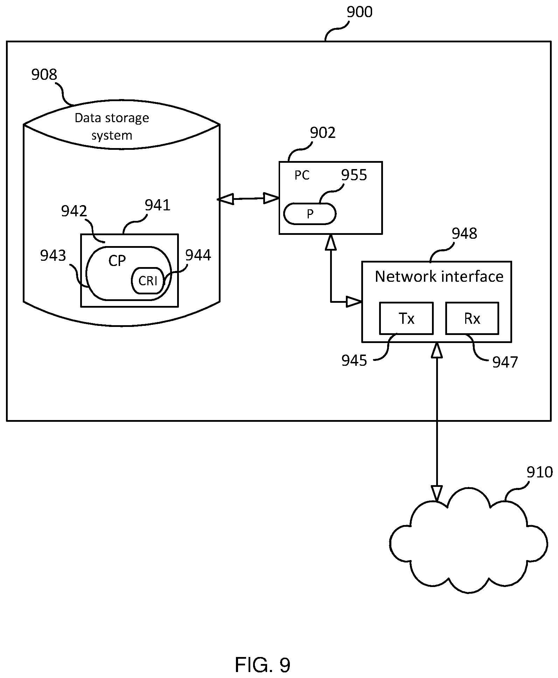

FIG. 9 is a block diagram of an apparatus such as the first network node or second network node, according to some embodiments. As shown in FIG. 9, the apparatus may comprise: processing circuitry (PC) 902, which may include one or more processors (P) 955 (e.g., a general purpose microprocessor and/or one or more other processors, such as an application specific integrated circuit (ASIC), field-programmable gate arrays (FPGAs), and the like); a network interface 948 comprising a transmitter (Tx) 945 and a receiver (Rx) 947 for enabling the apparatus to transmit data to and receive data from other nodes connected to a network 910 (e.g., an Internet Protocol (IP) network or RAN network) to which network interface 948 is connected; and a local storage unit (a.k.a., "data storage system") 908, which may include one or more non-volatile storage devices and/or one or more volatile storage devices. In embodiments where PC 902 includes a programmable processor, a computer program product (CPP) 941 may be provided. CPP 941 includes a computer readable medium (CRM) 942 storing a computer program (CP) 943 comprising computer readable instructions (CRI) 944. CRM 942 may be a non-transitory computer readable medium, such as, magnetic media (e.g., a hard disk), optical media, memory devices (e.g., random access memory, flash memory), and the like. In some embodiments, the CRI 944 of computer program 943 is configured such that when executed by PC 902, the CRI causes the apparatus to perform steps described herein (e.g., steps described herein with reference to the flow charts). In other embodiments, the apparatus may be configured to perform steps described herein without the need for code. That is, for example, PC 902 may consist merely of one or more ASICs. Hence, the features of the embodiments described herein may be implemented in hardware and/or software.

While various embodiments of the present disclosure are described herein, it should be understood that they have been presented by way of example only, and not limitation. Thus, the breadth and scope of the present disclosure should not be limited by any of the above-described example embodiments. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

### ABBREVIATIONS

- 3GPP: 3rd Generation Partnership Project
- 5GCN: 5G Core Network
- 5GS: 5G System
- AF: Application Function
- AMF: Access and Mobility Management Function
- AN: Access Network
- API: Application Programming Interface
- CA: Carrier Aggregation
- CN: Core Network
- CP: Control Plane
- CU: Central Unit
- DC: Dual Connectivity
- DU: Distributed Unit
- eNB: E-UTRAN NodeB
- EN-DC: E-UTRA-NR Dual Connectivity
- E-UTRA: Evolved UTRA
- E-UTRAN: Evolved UTRAN
- gNB: Radio base station in NR
- ID: Identifier/Identity
- IE: Information Element
- LTE: Long Term Evolution
- MBS: Multicast Broadcast Service
- MCE: Measurement Collector Entity
- MME: Mobility Management Entity
- MN: Master Node
- MR-DC: Multi-Radio Dual Connectivity
- NE-DC: NR-E-UTRA Dual Connectivity
- NEF: Network Exposure Function
- NG: Next Generation
- NGEN-DC: NG-RAN E-UTRA-NR Dual Connectivity
- NG-RAN: NG Radio Access Network
- NR: New Radio
- OAM/O&M: Operation and Maintenance
- PCell: Primary Cell
- PCF: Policy Control Function
- PSCell: Primary Secondary Cell
- PDU: Protocol Data Unit
- PLMN: Public Land Mobile Network
- QCI: QoS Class Identifier
- QMC: QoE Measurement Collection
- QoE: Quality of Experience
- QoS: Quality of Service
- RACH: Random Access Channel
- RAN: Radio Access Network
- RAT: Radio Access Technology
- RRC: Radio Resource Control
- RSRP: Reference Signal Received Power
- RSRQ: Reference Signal Received Quality
- RSSI: Received Signal Strength Indicator
- RV-QOE: RAN Visible QoE
- S1: The interface between the RAN and the CN in LTE.
- S1AP: S1 Application Protocol
- SCell: Secondary Cell
- SCG: Secondary Cell Group
- SINR: Signal to Interference and Noise Ratio
- SMF: Session Management Function
- SMO: Service Management and Orchestration
- SN: Secondary Node
- SNR: Signal to Noise Ratio
- TA: Terminal Adaptor
- TCE: Trace Collector Entity
- TE: Terminal Equipment
- UE: User Equipment

## Claims

1. A method (700) performed by a first network node (400, 500, 600) for handling requested information in collaboration with a second network node (402, 502, 602), the method comprising:
obtaining (701) a weight indication of one or more weight(s) of requested information and a priority indication of one or more priority(ies) of requested information;
generating (703) a first request message (401, 501, 601), the first request message comprising the weight indication and the priority indication; and
transmitting (705) the first request message towards the second network node.

2. The method of claim 1, further comprising receiving a second message (403, 503, 603) transmitted by the second network node, the second message comprising one or more of:
information selected based on the weight indication and/or the priority indication,
an indication of an amount of information that the second node may transmit towards the first network node,
an indication that the second network node can or cannot support the indication,
an indication of which indication of priority of requested information the second network node will apply,
an indication of which indication of weight of requested information the second network node will apply, or
a reference to one or more techniques applied in response to the request for information.

3. The method of any one of claims 1-2, wherein the first request message comprises:
the weight indication, wherein the weight indication indicates a weight to be used when sending the requested information towards the first network node, and/or
the priority indication, wherein the priority indication indicates a priority to be used when determining to transfer the requested information towards the first network node.

4. The method of any one of claims 1-3, wherein the first request message further comprises a condition relating to the weight indication and/or the priority indication, wherein the condition comprises one or more of:
an instruction for applying the weight and/or priority indication to the information, or
a triggering condition for applying the weight and/or priority indication to the information.

5. The method of any one of claims 1-4, wherein
the request message comprises the weight indication, and
the weight indication:
penalizes sending of first information towards the first network node compared to sending second information different than the first information,
promotes sending of the first information towards the first network node compared to sending the second information,
normalizes or continue sending the first information towards the first network node,
prohibits sending the first information towards the first network node,
reduces or increases a rate of sending of the first information towards the first network node, and/or
introduces a cap to sending of the first information.

6. The method of any one of claims 1-5, wherein
the first network node comprises a function training a machine learning model,
the first request message requests training data comprising one or more features, and
the weight and/or priority indication comprises an expected importance value for the one or more features.

7. The method of any one of claims 1-6, wherein
the first request message comprise the weight indication,
the first network node comprises a function performing machine learning model inference,
the first request message requests one or more inputs to the machine learning model, and
the weight indication comprises one or more weights for the one or more inputs.

8. The method of any one of claims 1-7, wherein the first request message further comprises:
an indication that transferring the requested information towards the first network node is suspended,
an indication relating to an overload condition at the first network node, and/or
an indication of an amount of information to transmit towards the first network node.

9. A first network node (400, 500, 600, 900) configured to:
obtain (701) a weight indication of one or more weight(s) of requested information and a priority indication of priority(ies) of requested information;
generate (703) a first request message (401, 501, 601), the first request message comprising the weight and priority indication; and
transmit (705) the first request message towards a second network node.

10. A method performed by a second network node (402, 502, 602) for handling requested information in collaboration with a first network node (400, 500, 600), the method comprising:
receiving (801) a first request message transmitted by the first network node, the first request message comprising a first weight indication of one or more weight(s) of requested information and a first priority indication of priority(ies) of requested information;
generating (803) a second message comprising a response to the first request message based on the first weight and first priority indication; and
transmitting (805) the second message towards the first network node.

11. The method of claim 10, further comprising:
generating a third message (505) based on the first weight and/or first priority indication; and
transmitting the third message towards a third network node (504).

12. The method of claim 11, wherein the third message comprises:
the first weight and/or first priority indication that was included in the first request message,
a second weight indication of one or more weight(s) of requested information, and/or
a second priority indication of one or more priority(ies) of requested information.

13. The method of any one of claims 11 or 12, further comprising:
receiving a fourth message (507) from the third network node, the fourth message comprising information selected based on a priority or a weight indication included in the third message.

14. The method of any one of claims 10-13, wherein the second message comprises one or more of:
information selected based on the first weight and/or first priority indication,
an indication of an amount of information that the second node may transmit towards the first network node,
an indication that the second network node can or cannot support the indication,
an indication of which indication of priority of requested information the second network node will apply, or a reference to one or more techniques applied in response to the request for information.

15. A second network node (402, 502, 602, 900) configured to:
receive (801) a first request message transmitted by a first network node (400, 500, 600, 900), the first request message comprising a first priority indication of priority(ies) of requested information and a first weight indication of weight(s) of requested information;
generate (803) a second message comprising a response to the first request message based on the first weight and first priority indication; and
transmit (805) the second message towards the first network node.

## Patentansprüche

1. Verfahren (700), das von einem ersten Netzwerkknoten (400, 500, 600) durchgeführt wird, zur Handhabung von angeforderten Informationen in Zusammenarbeit mit einem zweiten Netzwerkknoten (402, 502, 602), wobei das Verfahren Folgendes umfasst:
Erhalten (701) einer Gewichtungsangabe einer oder mehrerer Gewichtung(en) von angeforderten Informationen und einer Prioritätsangabe einer oder mehreren Priorität(en) von angeforderten Informationen;
Erstellen (703) einer ersten Anforderungsnachricht (401, 501, 601), wobei die erste Anforderungsnachricht die Gewichtungsangabe und die Prioritätsangabe umfasst;
Senden (705) der ersten Anforderungsnachricht an den zweiten Netzwerkknoten.

2. Verfahren nach Anspruch 1, ferner umfassend Empfangen einer zweiten Nachricht (403, 503, 603), die von dem zweiten Netzwerkknoten gesendet wird, wobei die zweite Nachricht eines oder mehrere von Folgenden umfasst:
Informationen, die basierend auf der Gewichtungsangabe und/oder der Prioritätsangabe ausgewählt werden,
eine Angabe einer Menge von Informationen, die der zweite Knoten an den ersten Netzwerkknoten senden kann,
eine Angabe, dass der zweite Netzwerkknoten die Angabe unterstützen kann oder nicht unterstützen kann,
eine Angabe dessen, welche Prioritätsangabe von angeforderten Informationen der zweite Netzwerkknoten anwenden wird,
eine Angabe dessen, welche Gewichtungsangabe von angeforderten Informationen der zweite Netzwerkknoten anwenden wird, oder
einen Verweis auf eine oder mehrere Techniken, die in Reaktion auf die Anforderung von Informationen angewendet werden.

3. Verfahren nach einem der Ansprüche 1-2, wobei die erste Anforderungsnachricht ferner Folgendes umfasst:
die Gewichtungsangabe, wobei die Gewichtungsangabe eine Gewichtung angibt, die beim Senden der angeforderten Informationen an den ersten Netzwerkknoten verwendet werden soll, und/oder
die Prioritätsangabe, wobei die Prioritätsangabe eine Priorität angibt, die beim Senden der angeforderten Informationen an den ersten Netzwerkknoten verwendet werden soll.

4. Verfahren nach einem der Ansprüche 1-3, wobei die erste Anforderungsnachricht ferner eine Bedingung umfasst, die sich auf die Gewichtungsangabe und/oder die Prioritätsangabe bezieht, wobei die Bedingung eines oder mehrere von Folgenden umfasst:
eine Anweisung zum Anwenden der Gewichtungs- und/oder Prioritätsangabe auf die Informationen oder
eine Auslösebedingung zum Anwenden der Gewichtungs- und/oder Prioritätsangabe auf die Informationen.

5. Verfahren nach einem der Ansprüche 1-4, wobei die Anforderungsnachricht die Gewichtungsangabe umfasst und die Gewichtungsangabe:
das Senden von ersten Informationen an den ersten Knoten im Gegensatz zum Senden von zweiten Informationen, die sich von den ersten Informationen unterscheiden, bestraft,
das Senden der ersten Informationen an den ersten Knoten im Gegensatz zum Senden von zweiten Informationen begünstigt,
das Senden der ersten Informationen an den ersten Netzwerkknoten normalisiert oder fortsetzt,
das Senden der ersten Informationen an den ersten Netzwerkknoten verbietet,
eine Senderate der ersten Informationen an den ersten Netzwerkknoten reduziert oder erhöht und/oder
eine Obergrenze zum Senden der ersten Informationen einführt.

6. Verfahren nach einem der Ansprüche 1-5, wobei
der erste Netzwerkknoten eine Funktion umfasst, die ein Modell für maschinelles Lernen trainiert,
die erste Anforderungsnachricht Trainingsdaten anfordert, die ein oder mehrere Merkmale umfassen, und
die Gewichtungs- und/oder die Prioritätsangabe einen erwarteten Wichtigkeitswert für das eine oder die mehreren Merkmale umfassen.

7. Verfahren nach einem der Ansprüche 1-6, wobei die erste Anforderungsnachricht die Gewichtungsangabe umfasst,
der erste Netzwerkknoten eine Funktion umfasst, die Inferenz eines Modells für maschinelles Lernen durchführt,
die erste Anforderungsnachricht eine oder mehrere Eingaben in das Modell für maschinelles Lernen anfordert und
die Gewichtungsangabe eine oder mehrere Gewichtungen für die eine oder die mehreren Eingaben umfasst.

8. Verfahren nach einem der Ansprüche 1-7, wobei die erste Anforderungsnachricht ferner Folgendes umfasst:
eine Angabe, dass die Übermittlung der angeforderten Informationen an den ersten Netzwerkknoten unterbrochen ist,
eine Angabe, die sich auf einen Überlastungszustand am ersten Netzwerkknoten bezieht, und/oder
eine Angabe einer Menge von an den ersten Netzwerkknoten zu sendenden Informationen.

9. Erster Netzwerkknoten (400, 500, 600, 900), der zu Folgendem konfiguriert ist:
Erhalten (701) einer Gewichtungsangabe einer oder mehrerer Gewichtung(en) von angeforderten Informationen und einer Prioritätsangabe von Priorität(en) von angeforderten Informationen;
Erstellen (703) einer ersten Anforderungsnachricht (401, 501, 601), wobei die erste Anforderungsnachricht die Gewichtungs- und Prioritätsangabe umfasst;
Senden (705) der ersten Anforderungsnachricht an einen zweiten Netzwerkknoten.

10. Verfahren, das von einem zweiten Netzwerkknoten (402, 502, 602) durchgeführt wird, zur Handhabung von angeforderten Informationen in Zusammenarbeit mit einem ersten Netzwerkknoten (400, 500, 600), wobei das Verfahren Folgendes umfasst:
Empfangen (801) einer ersten Anforderungsnachricht, die von dem ersten Netzwerkknoten gesendet wird, wobei die erste Anforderungsnachricht eine erste Gewichtungsangabe einer oder mehrerer Gewichtung(en) von angeforderten Informationen und eine erste Prioritätsangabe von Priorität(en) von angeforderten Informationen umfasst;
Erstellen (803) einer zweiten Nachricht, die eine Antwort auf die erste Anforderungsnachricht umfasst, basierend auf der ersten Gewichtungs- und ersten Prioritätsangabe; und
Senden (805) der zweiten Nachricht an den ersten Netzwerkknoten.

11. Verfahren nach Anspruch 10, ferner umfassend:
Erstellen einer dritten Nachricht (505) basierend auf der ersten Gewichtungs- und/oder ersten Prioritätsangabe; und
Senden der dritten Nachricht an einen dritten Netzwerkknoten (504).

12. Verfahren nach Anspruch 11, wobei dritte Nachricht Folgendes umfasst:
eine erste Gewichtungs- und/oder erste Prioritätsangabe, die in der ersten Anforderungsnachricht enthalten waren,
eine zweite Gewichtungsangabe einer oder mehrerer Gewichtung(en) von angeforderten Informationen und/oder
eine zweite Prioritätsangabe einer oder mehrerer Priorität(en) von angeforderten Informationen.

13. Verfahren nach einem der Ansprüche 11 oder 12, ferner umfassend:
Empfangen einer vierten Nachricht (507) von dem dritten Netzwerkknoten, wobei die vierte Nachricht Informationen umfasst, die basierend auf einer Priorität oder einer Gewichtungsangabe ausgewählt werden, die in der dritten Nachricht enthalten ist.

14. Verfahren nach einem der Ansprüche 10-13, wobei die zweite Nachricht eines oder mehrere von Folgenden umfasst:
Informationen, die basierend auf der ersten Gewichtungs- und/oder ersten Prioritätsangabe ausgewählt werden,
eine Angabe einer Menge von Informationen, die der zweite Knoten an den ersten Netzwerkknoten senden kann,
eine Angabe, dass der zweite Netzwerkknoten die Angabe unterstützen kann oder nicht unterstützen kann,
eine Angabe dessen, welche Prioritätsangabe von angeforderten Informationen der zweite Netzwerkknoten anwenden wird, oder
einen Verweis auf eine oder mehrere Techniken, die in Reaktion auf die Anforderung von Informationen angewendet werden.

15. Zweiter Netzwerkknoten (402, 502, 602, 900), der zu Folgendem konfiguriert ist:
Empfangen (801) einer ersten Anforderungsnachricht, die von einem ersten Netzwerkknoten (400, 500, 600, 900) gesendet wird, wobei die erste Anforderungsnachricht eine erste Prioritätsangabe von Priorität(en) von angeforderten Informationen und eine erste Gewichtungsangabe von Gewichtung(en) von angeforderten Informationen umfasst;
Erstellen (803) einer zweiten Nachricht, die eine Antwort auf die erste Anforderungsnachricht umfasst, basierend auf der ersten Gewichtungs- und ersten Prioritätsangabe; und
Senden (805) der zweiten Nachricht an den ersten Netzwerkknoten.

## Revendications

1. Procédé (700) réalisé par un premier nœud de réseau (400, 500, 600) pour traiter des informations demandées en collaboration avec un deuxième nœud de réseau (402, 502, 602), le procédé comprenant :
l'obtention (701) d'une indication de poids d'un ou plusieurs poids d'informations demandées et d'une indication de priorité d'une ou plusieurs priorités d'informations demandées ;
la génération (703) d'un premier message de demande (401, 501, 601), le premier message de demande comprenant l'indication de poids et l'indication de priorité ; et
la transmission (705) du premier message de demande vers le deuxième nœud de réseau.

2. Procédé selon la revendication 1, comprenant en outre la réception d'un deuxième message (403, 503, 603) transmis par le deuxième nœud de réseau, le deuxième message comprenant une ou plusieurs parmi :
des informations sélectionnées sur la base de l'indication de poids et/ou de l'indication de priorité,
une indication d'une quantité d'informations que le deuxième nœud peut transmettre vers le premier nœud de réseau,
une indication que le deuxième nœud de réseau peut ou ne peut pas prendre en charge l'indication,
une indication de quelle indication de priorité d'informations demandées le deuxième nœud de réseau appliquera,
une indication de quelle indication de poids d'informations demandées le deuxième nœud de réseau appliquera, ou
une référence à une ou plusieurs techniques appliquées en réponse à la demande d'informations.

3. Procédé selon l'une quelconque des revendications 1 et 2, dans lequel le premier message de demande comprend :
l'indication de poids, dans lequel l'indication de poids indique un poids à utiliser lors de l'envoi des informations demandées vers le premier nœud de réseau, et/ou
l'indication de priorité, dans lequel l'indication de priorité indique une priorité à utiliser lors de la détermination de transférer les informations demandées vers le premier nœud de réseau.

4. Procédé selon l'une quelconque des revendications 1 à 3, dans lequel le premier message de demande comprend en outre une condition relative à l'indication de poids et/ou à l'indication de priorité, dans lequel la condition comprend une ou plusieurs parmi :
une instruction d'application de l'indication de poids et/ou de l'indication de priorité aux informations, ou
une condition de déclenchement pour appliquer l'indication de poids et/ou l'indication de priorité aux informations.

5. Procédé selon l'une quelconque des revendications 1 à 4, dans lequel
le message de demande comprend l'indication de poids, et
l'indication de poids :
pénalise l'envoi de premières informations vers le premier nœud de réseau par rapport à l'envoi de deuxièmes informations différentes des premières informations,
favorise l'envoi des premières informations vers le premier nœud de réseau par rapport à l'envoi des deuxièmes informations,
normalise ou continue l'envoi des premières informations vers le premier nœud de réseau,
interdit l'envoi des premières informations vers le premier nœud de réseau,
réduit ou augmente un débit d'envoi des premières informations vers le premier nœud de réseau, et/ou
introduit une limite à l'envoi des premières informations.

6. Procédé selon l'une quelconque des revendications 1 à 5, dans lequel
le premier nœud de réseau comprend une fonction entraînant un modèle d'apprentissage automatique,
le premier message de demande demande des données d'entraînement comprenant une ou plusieurs caractéristiques, et
l'indication de poids et/ou l'indication de priorité comprennent une valeur d'importance attendue pour les une ou plusieurs caractéristiques.

7. Procédé selon l'une quelconque des revendications 1 à 6, dans lequel
le premier message de demande comprend l'indication de poids,
le premier nœud de réseau comprend une fonction réalisant une inférence de modèle d'apprentissage automatique,
le premier message de demande demande une ou plusieurs entrées au modèle d'apprentissage automatique, et
l'indication de poids comprend un ou plusieurs poids pour les une ou plusieurs entrées.

8. Procédé selon l'une quelconque des revendications 1 à 7, dans lequel le premier message de demande comprend en outre :
une indication que le transfert des informations demandées vers le premier nœud de réseau est suspendu,
une indication relative à une condition de surcharge au niveau du premier nœud de réseau, et/ou
une indication d'une quantité d'informations à transmettre vers le premier nœud de réseau.

9. Premier nœud de réseau (400, 500, 600, 900) configuré pour :
obtenir (701) une indication de poids d'un ou plusieurs poids d'informations demandées et une indication de priorité d'une ou plusieurs priorités d'informations demandées ;
générer (703) un premier message de demande (401, 501, 601), le premier message de demande comprenant l'indication de poids et l'indication de priorité ; et
transmettre (705) le premier message de demande vers un deuxième nœud de réseau.

10. Procédé réalisé par un deuxième nœud de réseau (402, 502, 602) pour traiter des informations demandées en collaboration avec un premier nœud de réseau (400, 500, 600), le procédé comprenant :
la réception (801) d'un premier message de demande transmis par le premier nœud de réseau, le premier message de demande comprenant une première indication de poids d'un ou plusieurs poids d'informations demandées et une première indication de priorité d'une ou plusieurs priorités d'informations demandées ;
la génération (803) d'un deuxième message comprenant une réponse au premier message de demande sur la base de la première indication de poids et de la première indication de priorité ; et
la transmission (805) du deuxième message vers le premier nœud de réseau.

11. Procédé selon la revendication 10, comprenant en outre :
la génération d'un troisième message (505) sur la base de la première indication de poids et/ou de la première indication de priorité ; et
la transmission du troisième message vers un troisième nœud de réseau (504).

12. Procédé selon la revendication 11, dans lequel le troisième message comprend :
la première indication de poids et/ou la première indication de priorité qui ont été incluses dans le premier message de demande,
une deuxième indication de poids d'un ou plusieurs poids d'informations demandées, et/ou
une deuxième indication de priorité d'une ou plusieurs priorités d'informations demandées.

13. Procédé selon l'une quelconque des revendications 11 et 12, comprenant en outre :
la réception d'un quatrième message (507) depuis le troisième nœud de réseau, le quatrième message comprenant des informations sélectionnées sur la base d'une indication de priorité ou d'une indication de poids incluse dans le troisième message.

14. Procédé selon l'une quelconque des revendications 10 à 13, dans lequel le deuxième message comprend une ou plusieurs parmi :
des informations sélectionnées sur la base de la première indication de poids et/ou la première indication de priorité,
une indication d'une quantité d'informations que le deuxième nœud peut transmettre vers le premier nœud de réseau,
une indication que le deuxième nœud de réseau peut ou ne peut pas prendre en charge l'indication,
une indication de quelle indication de priorité d'informations demandées le deuxième nœud de réseau appliquera, ou
une référence à une ou plusieurs techniques appliquées en réponse à la demande d'informations.

15. Deuxième nœud de réseau (402, 502, 602, 900) configuré pour :
recevoir (801) un premier message de demande transmis par un premier nœud de réseau (400, 500, 600, 900), le premier message de demande comprenant une première indication de priorité d'une ou plusieurs priorités d'informations demandées et une première indication de poids d'un ou plusieurs poids d'informations demandées ;
générer (803) un deuxième message comprenant une réponse au premier message de demande sur la base de la première indication de poids et de la première indication de priorité ; et
transmettre (805) le deuxième message vers le premier nœud de réseau.
